# EUROPÄISCHE PATENTSCHRIFT

(11) **EP 1 796 932 B1**
(45) Veröffentlichungstag und Bekanntmachung des Hinweises auf die Patenterteilung: **03.03.2010**
(21) Anmeldenummer: 05763939.5
(22) Anmeldetag: 04.07.2005
(51) Int. Cl.: B60K 28/10, B60T 8/24, B62D 37/00

(54) **VERFAHREN UND VORRICHTUNG ZUR BEHEBUNG EINER UMKIPPGEFAHR EINES KRAFTFAHRZEUGS**
METHOD AND DEVICE FOR ELIMINATING THE ROLLOVER RISK OF A MOTOR VEHICLE
PROCEDE ET DISPOSITIF POUR ELIMINER LE RISQUE DE RETOURNEMENT D'UN VEHICULE AUTOMOBILE

(30) Priorität: 19.08.2004 DE 102004040140
(43) Veröffentlichungstag der Anmeldung: 20.06.2007
(73) Patentinhaber: ROBERT BOSCH GMBH, 70442 Stuttgart (DE)
(72) Erfinder: KIEREN, Martin, 71672 Marbach A. N. (DE); NENNINGER, Gero, 71706 Markgroeningen (DE); NIMMO, Matthew, 71638 Ludwigsburg (DE); NARDI, Flavio, Farmington Hills, MI 48331 (US); SAMSONS, Andris, Ann Arbor, MI 48105 (US); NAPOLSKICH, Wadim, 71638 Ludwigsburg (DE)
(86) Internationale Anmeldenummer: PCT/EP2005/053155
(87) Internationale Veröffentlichungsnummer: WO 2006/018349

(56) Entgegenhaltungen:
- DE-A1- 10 128 357
- DE-A1- 19 907 633
- US-A1- 2001 037 677
- US-B1- 6 756 890

## Beschreibung

### Stand der Technik

Die Erfindung betrifft ein Verfahren zur Umkippvermeidung eines Kraftfahrzeugs in lateraler Richtung.

Aus der DE 101 35 020 A1 sind ein Verfahren und eine Vorrichtung zur Erkennung und Behebung einer Umkippgefahr eines mit einem Regelungssystem ausgestatteten Fahrzeugs um eine in Fahrzeuglängsrichtung orientierte Fahrzeugachse bekannt. Dabei wird eine die Querdynamik des Fahrzeugs beschreibende Größe ermittelt und mit einem Schwellenwert verglichen. Für den Fall einer Überschreitung des Schwellenwerts wird die Menge aller möglichen vom Regelungssystem zur Stabilitätsregelung an Aktoren abgebbaren Kombinationen von Ausgangssignalwerten eingeschränkt.

### Vorteile der Erfindung

Die Erfindung betrifft ein Verfahren zur Umkippvermeidung eines Kraftfahrzeugs in lateraler Richtung,
- bei dem eine endliche Anzahl vordefinierter Fahrzustände festgelegt ist,
- bei dem ermittelt wird, in welchem der vordefinierten Fahrzustände sich das Fahrzeug momentan befindet,
- wobei der ermittelte vordefinierte Fahrzustand von Sensorsignalen sowie von demjenigen vordefinierten Fahrzustand abhängig ist, in welchem sich das Fahrzeug zuletzt befunden hat, und
- abhängig vom momentan vorliegenden vordefinierten Fahrzustand wenigstens ein Bremseingriff zur Vermeidung des Umkippens durchgeführt wird.

Dadurch geht nicht nur die aktuelle fahrdynamische Situation, sondern auch deren Vorgeschichte in die Regelung ein. Damit wird eine besser an die gesamte Fahrsituation angepasste Regelung ermöglicht.

Eine vorteilhafte Ausgestaltung der Erfindung ist dadurch gekennzeichnet, dass es sich bei den Sensorsignalen wenigstens um die Gierrate, die Querbeschleunigung, den Lenkwinkel sowie die Raddrehzahlen handelt. Diese Signale stehen in einem Fahrdynamikregelungssystem üblicherweise zur Verfügung.

Eine vorteilhafte Ausgestaltung der Erfindung ist dadurch gekennzeichnet, dass die Sensorsignale zusätzlich die vom Fahrer vorgegebene Fahrpedalstellung sowie den vom Fahrer vorgegebenen Bremsvordruck umfassen.

Eine vorteilhafte Ausgestaltung der Erfindung ist dadurch gekennzeichnet, dass in wenigstens einem der vordefinierten Fahrzustände bei Vorliegen einer Kurvenfahrt das kurvenäußere Vorderrad gebremst wird.

Eine vorteilhafte Ausgestaltung der Erfindung ist dadurch gekennzeichnet, dass in wenigstens einem der vordefinierten Fahrzustände eine Vorbefüllung wenigstens eines Radbremszylinders stattfindet, durch welche aber noch keine nennenswerte Bremswirkung aufgebracht wird. Dadurch wird eine kürzere Reaktionszeit der Bremsen ermöglicht.

Eine vorteilhafte Ausgestaltung der Erfindung ist dadurch gekennzeichnet, dass die vordefinierten Zustände die Zustände eines Zustandsautomaten bilden.

Weiter umfasst die Erfindung eine Vorrichtung zur Umkippvermeidung eines Kraftfahrzeugs in lateraler Richtung,
- in welcher eine endliche Anzahl vordefinierter Fahrzustände festgelegt ist,
- welche Sensormittel zur Erfassung fahrdynamischer Größen beinhaltet,
- welche Fahrzustandsermittlungsmittel beinhaltet, mit denen ermittelt wird, in welchem der vordefinierten Fahrzustände sich das Fahrzeug momentan befindet,
- wobei der ermittelte vordefinierte Fahrzustand von den mit den Sensormitteln ermittelten Sensorsignalen sowie von demjenigen vordefinierten Fahrzustand abhängig ist, in welchem sich das Fahrzeug zuletzt befunden hat, und
- Bremsmittel beinhaltet, mit denen abhängig vom momentan vorliegenden vordefinierten Fahrzustand wenigstens ein Bremseingriff zur Vermeidung des Umkippens durchgeführt wird.

Eine vorteilhafte Ausgestaltung der Erfindung ist dadurch gekennzeichnet, dass die Vorrichtung Teil eines Fahrdynamikregelungssystems ist.

Die vorteilhaften Ausgestaltungen des erfindungsgemäßen Verfahrens äußern sich selbstverständlich auch als vorteilhafte Ausgestaltungen der erfindungsgemäßen Vorrichtung und umgekehrt.

### Zeichnung

Die Zeichnung besteht aus den Figuren 1 bis 5.
Figur 1 zeigt den Aufbau der Erfindung.
Figur 2 zeigt eine prinzipielle graphische Darstellung zweier Zustände eines Zustandsautomaten sowie deren Übergang.
Figur 3 zeigt den zeitlichen Verlauf einiger relevanter Größen in einem hochdynamischen Fahrmanöver.
Fig. 4 zeigt den Ablauf des erfindungsgemäßen Verfahrens.
Fig. 5 zeigt den Aufbau der erfmdungsgemäßen Vorrichtung.

### Ausführungsbeispiele

Die Erfindung beruht darauf, dass alle möglichen Fahrmanöver bzw. Fahrzustände des Fahrzeugs hinsichtlich ihrer Bedeutung im Zusammenhang mit dem Umkipprisiko in hochdynamischen Fahrsituationen in eine endliche Anzahl von Klassen eingeteilt werden. Dabei ist jedem möglichen Fahrzustand genau eine Klasse zugeordnet. Das Fahrzeug befindet sich damit, abhängig vom Fahrzustand, stets in genau einer der Klassen. Weiter sind für jeden möglichen Übergang von einer Klasse zu einer anderen Klasse, z.B. von Klasse A nach Klasse B, Übergangskriterien definiert. Sind diese Übergangskriterien, z.B. für den Übergang von Klasse A nach Klasse B erfüllt, dann fällt ein Fahrzeug, dessen Fahrzustand seither Klasse A zugeordnet war, nun in Klasse B.

Durch die Erfindung wird damit eine Regelungsstrategie zur Umkippsiabilisierung geschaffen, indem die möglichen Fahrmanöver in geeignete Klassen eingeteilt werden, wobei jeder Klasse eine Eingriffsstrategie zur Fahrzeugstabilisierung (z.B. geeignete Brems- oder Motormomenteingriffe) zugeteilt wird. Vorteilhafterweise soll für die Zuordnung der Fahrmanöver in die jeweiligen Klassen bzgl. der Sensoren ausschließlich auf die in einem Fahrdynamikregelungssystem enthaltenen Sensoren zurückgegriffen werden. Dies sind in erster Linie Raddrehzahlsensoren, ein Querbeschleunigungssensor, ein Gierratensensor und ein Lenkwinkelsensor.

Dazu werden die Sensorsignale in einem sogenannten hybriden Zustandsautomaten verarbeitet. Der hybride Zustandsautomat verwendet sowohl Fahrereingaben als auch fahrdynamische Größen des Fahrzeugs, um in diskrete Zustände einzutreten, sie zu verlassen und von einem diskreten Zustand in einen anderen überzugehen. Jeder diskrete Zustand repräsentiert repräsentiert eine bestimmte Phase einer Fahrsituation.

Weil die diskreten Zustände spezifische Eintrittskriterien haben, führt die Verwendung eines Zustandsautomaten beim ESP-Steuergerät (ESP = "Electronic Stability Program") zu einer Art "Gedächtnis" des Steuergeräts. Die Ausgabe des Zustandsautomaten sind sowohl diskrete als auch kontinuierliche Variablen, welche zur radindividuellen Bremsmoment- oder Radschlupfregelung benutzt werden.

Die Benutzung eines Zustandsautomaten zur Identifizierung gefährlicher Fahrsituationen erlaubt es dem ESP-Steuergerät zu entscheiden, an welchem Rad mit welcher Intensität eingegriffen werden muss.

Typische Fahrmanöver lassen sich beispielsweise in folgende Gruppen aufteilen:
- Fahrmanöver, die einen ersten Anlenkvorgang durch den Fahrer enthalten, z.B. J-Turn-Manöver, Kreisfahren mit abnehmendem Radius, aber auch Fishhook-Manöver, Spurwechsel,...
- Fahrmanöver mit einem Rücklenkvorgang, wie z.B. dem Einlenken in die Ausweichgasse bei einem Spurwechsel oder das Zurücklenken nach der ersten Haltephase bei einem Fishhook-Manöver
- Fahrmanöver mit drei- oder mehrfachen wechselseitigen Lenkvorgängen

Jeder Lenkvorgang und sogar einzelne Zeitabschnitte des Lenkvorgang werden durch typische Fahrereingriffe (insbesondere über das Lenkrad) und typische Fahrzeugreaktionen charakterisiert. Deshalb kann jedes dynamische Lenkmanöver in mehrere Phasen eingeteilt werden, welche in einer speziellen Reihenfolge aufeinanderfolgen. Um eine möglichst optimale Fahrzeugstabilisierung und/oder Umkippvermeidung zu erreichen, muss durch das Steuergerät für jede dieser Phasen eine geeignete Eingriffsstrategie und Eingriffsintensität bereitgestellt werden. Für deren Realisierung eignet sich ein hybrider Zustandsautomat.

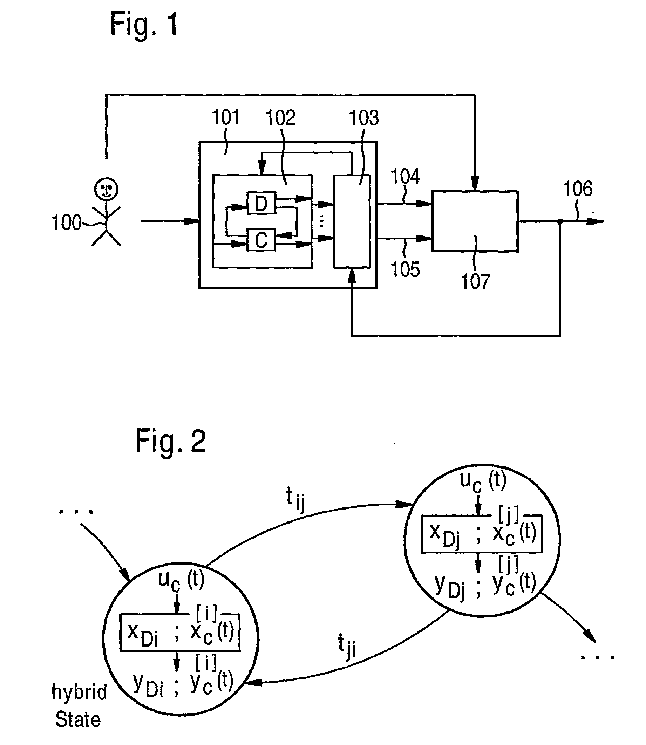

In Fig. 1 ist das Gesamtsystem dargestellt. Der mit 100 gekennzeichnete Fahrer gibt Größen wie Lenkwinkel, Fahrpedalstellung und Bremsdruck vor, diese werden an das Fahrzeugstabilisierungssystem 101 gegeben. Das Fahrzeugstabilisierungssystem 101 enthält
- ein Anteil 102 des Steuergeräts, welcher für die Umkippvermeidung zuständig ist sowie
- ein serienmäßiges Fahrdynamikregelungssystem 103.

Die Zustandsgrößen und Ausgangsgrößen des Anteils 102 des Steuergeräts setzen sich aus einem diskreten Anteil und einem kontinuierlichen Anteil zusammen, die Eingangsgrößen sind rein kontinuierlicher Natur. Die diskrete Dynamik D und die kontinuierliche Dynamik C sind über geeignete Schnittstellen verbunden.

Das Steuergerät 101 leitet Signale 104 an die Radbremsen und Signale 105 an das Motorsteuergerät des Fahrzeugs 107 weiter. Als Folge davon und der entsprechenden Fahrervorgabe begibt sich das Fahrzeug 107 in den Fahrzustand 106, die mit Sensoren erfassten Signale wie z.B. Gierrate oder Querbeschleunigung werden an den ESP-Anteil des Steuergeräts 103 rückgekoppelt.

Eine mögliche graphische Darstellung des Anteils 102 ist in Fig. 2 dargestellt. Dabei kennzeichnen die Zustände 1, 2, ..., n (jeweils charakterisiert durch den Vektor x_{D1}, x_{D2},...,x_{Dn} der Systemgrößen) die unterschiedlichen Phasen während eines hochdynamischen Lenkmanövers, d.h. die diskreten Klassen. Eine mögliche Aufteilung ergibt z.B. die folgenden Klassen:
- Zustand 1 = Grundzustand: Keine Umkippstabilisierung notwendig.
- Zustand 2 = Vorbefüllungszustand: Aufgrund der ersten Fahrzeugreaktion auf einen starken Anlenkvorgang durch den Fahrer erfolgt eine Vorbereitung des folgenden Stabilisierungseingriffes.
- Zustand 3= Haltezustand: Die sich durch Fahrzeugreaktion auf die Fahrervorgabe einstellende hohe Querbeschleunigung wird begrenzt.
- Zustand 4 = Zurücklenkzustand: Führt das Zurücklenken des Fahrers zwar zu einem Rückgang der Querbeschleunigung, lässt aber gleichzeitig ein starkes Anwachsen der Querbeschleunigung mit entgegengesetztem Vorzeichen erwarten, wird der vorherige Eingriff dosiert beendet und der folgende Stabilisierungseingriff vorbereitet.
- Zustand 5 = Gegenschwungzustand: Die sich durch die Fahrervorgabe erneut einstellende hohe Querbeschleunigung (mit entgegengesetztem Vorzeichen verglichen zu Zustand 3) wird begrenzt.

Um die Ansprechzeit der Bremsen zu verkürzen, werden in den Zuständen 2 und 4 ein Vorbereitungsdruck mit geringem Pegel an einer Radbremse eines Rades aufgebaut, an dem in Kürze ein Eingriff zur Kippstabilisierung erwartet wird.

Die Größen tᵢⱼ kennzeichnen Bedingungen für den Übergang vom Zustand i in den Zustand j. Der Übergang tᵢⱼ findet z.B. dann statt, wenn eine oder mehrere kontinuierliche Variable entsprechende Grenzwerte überschreiten. Beispielsweise findet nach einem starken (durch den Fahrer bewirkten) Anwachsen des Lenkwinkels und einer Veränderung der Differenz zwischen Ist-Gierrate und Soll-Gierrate ein Übergang vom Grundzustand in den Vorbefüllungszustand statt. Ein darauf folgendes weiteres Anwachsen der Querbeschleunigung führt im Allgemeinen zu einem Übersteuern des Fahrzeugs und damit zu einem Übergang vom Vorbefüllungszustand in den Haltezustand. Während des Haltezustands wird durch einen Algorithmus überwacht, ob die Querbeschleunigung sich unterhalb der kippkritischen Grenze noch wesentlich ändert. Ist dies nicht der Fall, kann entweder zum Grundzustand zurückgekehrt werden oder mit einer speziellen Radschlupfregelung dafür gesorgt werden, dass ein starkes Untersteuem des Fahrzeugs vermieden wird (ohne durch einen zu frühen Abbruch des Eingriffs ein erneutes Anwachsen der Querbeschleunigung auszulösen). Wird jedoch während des Haltezustands eine starke Gegenlenkbewegung des Fahrers festgestellt, dann findet ein Übergang in den Zurücklenkzustand statt, in welchem ein spezielles Regelungsverfahren angepasst an den Übergang zur Gegenbewegung des Fahrzeugs zur Anwendung kommt.

Lässt sich aus der Fahrzeugbewegung auf eine nachfolgende hohe Querbeschleunigung schließen, führt dies zu einem Übergang in den Gegenschwungzustand, dem wiederum ein geeigneter Eingriff zur Begrenzung der Querbeschleunigung zugeordnet ist

Diskrete Ausgangssignale y_{Di} des hybriden Zustandsautomaten können zur Beeinflussung anderer Teile des Fahrzeugstabilisierungssystems benutzt werden, welche nicht der Umkippvermeidung dienen. Dabei kann es sich beispielsweise um die Aktivierung des Gierratenreglers im Fall einer umkippkritischen Situation handeln, welcher zuvor durch den Fahrer deaktiviert wurde.

In Fig. 2 kennzeichnet x_{c}^{[i]}(t) den Vektor kontinuierlicher, zeitabhängiger Größen der Bremsschlupf und Bremsmomentregelungsstrategie abhängig vom diskreten Zustand i. Dabei steht i für die Nummer des Zustandes, der durch das Paar (x_{Di}, x_{c}^{[i]}(t)) gekennzeichnet ist.

u_{c} kennzeichnet die kontinuierlichen Eingangssignale für den Zustandsautomaten, dabei handelt es sich um den vom Fahrer eingestellten Lenkwinkel, die Querbeschleunigung, die Gierrate, die Längsgeschwindigkeit, den Schräglaufwinkel oder weitere daraus abgeleitete Größen wie beispielsweise der nach der Ackermann-Beziehung berechnete Sollwert der Querbeschleunigung.

y_{c} kennzeichnet kontinuierliche Ausgangssignale wie beispielsweise das Soll-Bremsmoment oder den Soll-Bremsschlupf der kurvenäußeren Räder. Für starke Gegenlenkvorgänge bei Spurwechselmanövem wird auch eine prädiktive Bremsmomentregelung, insbesondere eine Vorbefüllung der Radbremszylinder, an den kurveninneren Rädern eingeleitet.

Der dargestellte Zustandsautomat kann in einfacher Art und Weise über die dargestellten Zustände 1 bis 5 hinausgehend erweitert werden, um andere Fahrsituationen wie beispielsweise Slalomfahrt zu identifizieren.

Mit der dargestellten Erweiterung kann ein ESP-System in umkippkritischen Situationen noch präziser reagieren, angepasst sowohl an den Fahrerwunsch als auch an das Fahrzeugverhalten.

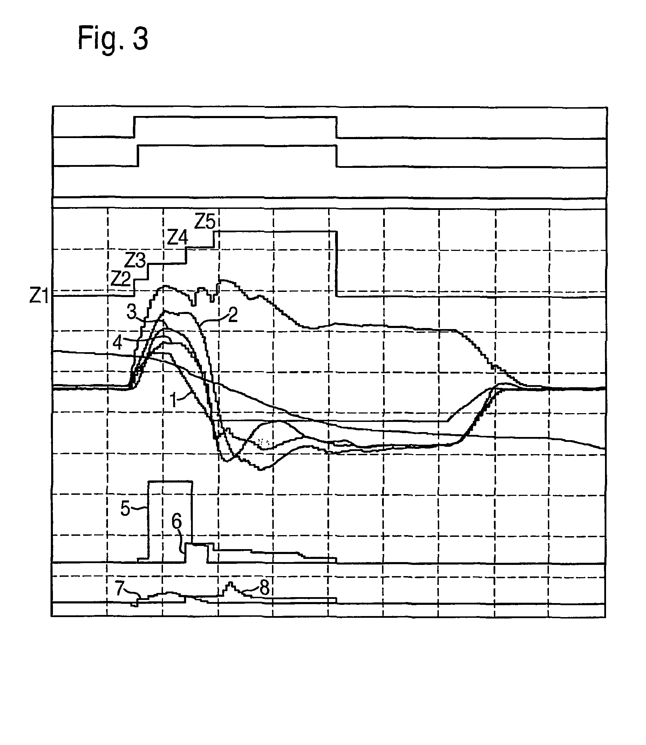

In Fig. 3 ist in Abszissenrichtung die Zeit t und in Ordinatenrichtung der Wert einiger relevanter Größen aufgetragen. Dabei wurde ein von der NHTSA (NHTSA = "National Highway Traffic Safety Administration)idefiniertes "Fishhook-Manöver" gefahren. Dabei kennzeichnen
1= zeitlicher Verlauf des Lenkwinkels
2 = gemessene Querbeschleunigung
3 = gemessene Ist-Gierrate
4 = Soll-Gierrate
5 = Bremsmoment am linken Vorderrad
6 = Bremsmoment am rechten Vorderrad
7 = Bremsschlupf am linken Vorderrad
8 = Bremsschlupf am rechten Vorderrad.

Z1, Z2, Z3, Z4 und Z5 kennzeichnen die bereits definierten Zustände Zustand 1 (Grundzustand) bis Zustand 5 (Gegenschwungzustand).

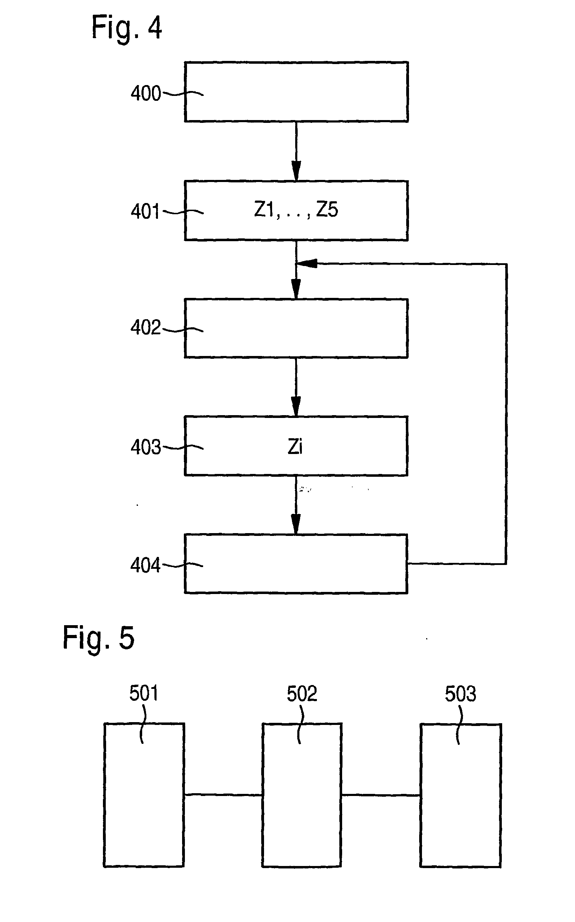

Der Ablauf des erfindungsgemäßen Verfahrens ist in Fig. 4 dargestellt. Nach dem Start in Block 400 werden in Block 401 die vordefinierten Fahrzustände ermittelt bzw. von einem Speichermedium eingelesen bzw. bereitgestellt. Anschließend werden in Block 402 Sensorsignale eingelesen und in Block 403 anhand der Sensorsignale sowie des vorausgehenden Fahrzustands der aktuelle Fahrzustand ermittelt. In Block 404 finden als Reaktion auf den ermittelten aktuellen Fahrzustand z.B. Bremseingriffe statt. Durch diese Bremseingriffe ändern sich die aktuellen fahrdynamischen Größen und damit die Sensorsignale, deshalb findet eine Rückkopplung an Block 402 mit erneutem Einlesen der Sensorsignale statt.

Der Aufbau der erfindungsgemäßen Vorrichtung ist in Fig. 5 dargestellt. Dabei kennzeichnet Block 501 die Sensormittel zur Erfassung fahrdynamischer Größen. Block 502 beinhaltet Fahrzustandsermittlungsmittel, mit denen ermittelt wird, in welchem der vordefinierten Fahrzustände sich das Fahrzeug momentan befindet, wobei der ermittelte vordefinierte Fahrzustand von den mit den Sensormitteln 501 ermittelten Sensorsignalen sowie von demjenigen vordefinierten Fahrzustand abhängig ist, in welchem sich das Fahrzeug zuletzt befunden hat. Block 503 beinhaltet Aktormittel bzw. Bremsmittel, mit denen abhängig vom momentan vorliegenden vordefinierten Fahrzustand wenigstens ein Bremseingriff zur Vermeidung des Umkippens durchgeführt wird.

## Patentansprüche

1. Verfahren zur Umkippvermeidung eines Kraftfahrzeugs in lateraler Richtung,
- bei dem eine endliche Anzahl vordefinierter Fahrzustände (Z1,.,.,Z5) festgelegt ist,
- bei dem ermittelt wird, in welchem der vordefinierten Fahrzustände (Z1,...,Z5) sich das Fahrzeug momentan befindet (401),
- wobei der ermittelte vordefinierte Fahrzustand (Z1,...,Z5) von Sensorsignalen (402) sowie von demjenigen vordefinierten Fahrzustand abhängig ist, in welchem sich das Fahrzeug zuletzt befunden hat, und
- abhängig vom momentan vorliegenden vordefinierten Fahrzustand wenigstens ein Bremseingriff (404) zur Vermeidung des Umkippens durchgeführt wird.

2. Verfahren nach Anspruch 1, **dadurch gekennzeichnet, dass** es sich bei den Sensorsignalen um fahrdynamische Größen beschreibende Sensorsignale handelt.

3. Verfahren nach Anspruch 2, **dadurch gekennzeichnet, dass** es sich bei den Sensorsignalen wenigstens um die Gierrate, die Querbeschleunigung, den Lenkwinkel sowie die Raddrehzahlen handelt.

4. Verfahren nach Anspruch 2, **dadurch gekennzeichnet, dass** die Sensorsignale zusätzlich die vom Fahrer vorgegebene Fahrpedalstellung sowie den vom Fahrer vorgegebenen Bremsvordruck umfassen.

5. Verfahren nach Anspruch 1, **dadurch gekennzeichnet, dass** in wenigstens einem der vordefinierten Fahrzustände bei Vorliegen einer Kurvenfahrt das kurvenäußere Vorderrad gebremst wird.

6. Verfahren nach Anspruch 1, **dadurch gekennzeichnet, dass** in wenigstens einem der vordefinierten Fahrzustände eine Vorbefüllung wenigstens eines Radbremszylinders stattfindet, durch welche aber noch keine nennenswerte Bremswirkung aufgebracht wird.

7. Verfahren nach Anspruch 1, **dadurch gekennzeichnet, dass** die vordefinierten Zustände die Zustände eines Zustandsautomaten bilden.

8. Vorrichtung zur Umkippvermeidung eines Kraftfahrzeugs in lateraler Richtung,
- in welcher eine endliche Anzahl vordefinierter Fahrzustände (Z1,...,Z5) festgelegt ist,
- welche Sensormittel (501) zur Erfassung fahrdynamischer Größen beinhaltet,
- Fahrzustandsermittlungsmittel (502) beinhaltet, mit denen ermittelt wird, in welchem der vordefinierten Fahrzustände sich das Fahrzeug momentan befindet,
- wobei der ermittelte vordefinierten Fahrzustand von den mit den Sensormitteln ermittelten Sensorsignalen sowie von demjenigen vordefinierten Fahrzustand abhängig ist, in welchem sich das Fahrzeug zuletzt befunden hat, und
- Bremsmittel (504) beinhaltet, mit denen abhängig vom momentan vorliegenden vordefinierten Fahrzustand wenigstens ein Bremseingriff zur Vermeidung des Umkippens durchgeführt wird.

9. Vorrichtung nach Anspruch 8, **dadurch gekennzeichnet, dass** die Vorrichtung Teil eines Fahrdynamikregelungssystems ist.

## Claims

1. Method for avoiding rolling over of a motor vehicle in the lateral direction,
- in which a finite number of predefined driving states (Z1, ...,Z5) is specified,
- in which it is determined which of the predefined driving states (Z1,...,Z5) the vehicle is currently in (401),
- wherein the determined predefined driving state (Z1,...,Z5) is dependent on sensor signals (402) and on that predefined driving state which the vehicle was last in, and
- at least one braking intervention (404) for avoiding rolling over is carried out as a function of the currently present predefined driving state.

2. Method according to Claim 1, **characterized in that** the sensor signals are sensor signals which describe vehicle movement dynamics variables.

3. Method according to Claim 2, **characterized in that** the sensor signals are at least the yaw rate, the lateral acceleration, the steering angle and the wheel speeds.

4. Method according to Claim 2, **characterized in that** the sensor signals additionally comprise the accelerator pedal position predefined by the driver and the brake admission pressure predefined by the driver.

5. Method according to Claim 1, **characterized in that**, when cornering is occurring, the front wheel on the outside of the bend is braked in at least one of the predefined driving states.

6. Method according to Claim 1, **characterized in that** precharging of at least one wheel brake cylinder, which does not, however, bring about any appreciable braking effect, takes place in at least one of the predefined driving states.

7. Method according to Claim 1, **characterized in that** the predefined states form the states of an automatic state system.

8. Device for avoiding rolling over of a motor vehicle in the lateral direction,
- in which a finite number of predefined driving states (Z1,...,Z5) is specified,
- which device contains sensor means (501) for sensing vehicle movements dynamics variables,
- contains driving-state-determining means (502) which determine which of the predefined driving states the vehicle is currently in,
- wherein the determined predefined driving state is dependent on the sensor signals which are determined with the sensor means and on that predefined driving state which the vehicle was last in, and
- contains braking means (504) which carry out, as a function of the currently present predefined driving state, at least one braking intervention for avoiding rolling over.

9. Device according to Claim 8, **characterized in that** the device is part of a vehicle movement dynamics control system.

## Revendications

1. Procédé pour éviter le retournement d'un véhicule automobile dans la direction latérale, dans lequel
- un nombre fini d'états prédéfinis de conduite (Z1, ..., Z5) est défini,
- on détermine dans quel état prédéfini de conduite (Z1, ..., Z5) le véhicule se trouve (401) à chaque instant,
- l'état prédéfini de conduite (Z1, ..., Z5) ainsi déterminé dépend de signaux de détection (402) ainsi que de l'état prédéfini de conduite particulier dans lequel le véhicule s'est trouvé en dernier lieu et
- au moins une intervention de freinage (404) qui dépend de l'état prédéfini de conduite présent à cet instant est exécutée pour éviter le retournement.

2. Procédé selon la revendication 1, **caractérisé en ce que** les signaux de détection sont des signaux de détection qui décrivent des grandeurs dynamiques du déplacement.

3. Procédé selon la revendication 2, **caractérisé en ce que** les signaux de détection sont au moins la vitesse de lacet, l'accélération transversale, l'angle de direction et la vitesse de rotation des roues.

4. Procédé selon la revendication 2, **caractérisé en ce que** les signaux de détection comprennent en supplément la position de la pédale d'accélérateur imposée par le conducteur ainsi que la pré-pression de freinage imposée par le conducteur.

5. Procédé selon la revendication 1, **caractérisé en ce que** dans au moins l'un des états prédéfinis de conduite, en conduite en virage, la roue avant située à l'extérieur dans le virage est freinée.

6. Procédé selon la revendication 1, **caractérisé en ce que** dans au moins un des états prédéfinis de conduite a lieu un pré-remplissage d'au moins un cylindre de frein de roue sans pour autant appliquer une action de freinage notable.

7. Procédé selon la revendication 1, **caractérisé en ce que** les états prédéfinis forment les états d'un automate d'état.

8. Dispositif en vue d'éviter le retournement d'un véhicule automobile dans la direction latérale, dans lequel
un nombre fini d'états prédéfinis de conduite (Z1, ..., Z5) est défini,
le dispositif présentant
- des moyens de détection (501) qui saisissent des grandeurs dynamiques du déplacement,
- des moyens (502) de détermination de l'état de conduite qui permettent de déterminer dans lequel des états prédéfinis de conduite le véhicule se trouve à chaque instant,
- l'état prédéfini de conduite ainsi déterminé dépendant des signaux de détection saisis par les moyens de détection ainsi que de l'état prédéfini de conduite particulier dans lequel le véhicule s'est trouvé en dernier lieu et
- le dispositif contenant des moyens de freinage (504) qui exécutent au moins une intervention de freinage en fonction de l'état prédéfini de conduite présent à cet instant, en vue d'éviter le retournement.

9. Dispositif selon la revendication 8, **caractérisé en ce que** le dispositif fait partie d'un système de régulation dynamique de la conduite.
